# EUROPEAN PATENT SPECIFICATION

(11) **EP 3 296 227 B1**
(45) Date of publication and mention of the grant of the patent: **02.10.2019**
(21) Application number: 17186881.3
(22) Date of filing: 18.08.2017
(51) Int. Cl.: B65D 77/20, B29C 51/00, B65D 81/20

(54) **CONTAINER FOR FOODSTUFFS**
BEHÄLTER FÜR LEBENSMITTEL
CONTENANT POUR PRODUITS ALIMENTAIRES

(30) Priority: 14.09.2016 DK 201670703
(43) Date of publication of application: 21.03.2018
(73) Proprietor: Faerch A/S, 7500 Holstebro (DK)
(72) Inventor: Sarusie, Ram Søren, 7500 Holstebro (DK); Lauridsen, Carsten Linding Borregaard, 7600 Struer (DK)
(74) Representative: Zacco Denmark A/S

(56) References cited:
- EP-B1- 2 643 238
- KR-A- 20150 054 784
- US-A1- 2013 068 768

## Description

The present invention relates to a sealed container for foodstuffs.

### Background of the invention

In the food industry, it is well known to pack different kinds of foodstuff into sealed containers made from plastic materials. Such containers may typically consist of some form of tray, which is sealed with a lid or a lidding film to protect the foodstuff inside the tray.

Often, the tray and the lid or lidding film are made from amorphous polyethylene terephthalate (APET). This material is preferred due to its characteristics, which make it very suitable for storage of foodstuffs, for instance a high transparency and a significantly higher impermeability to oxygen than other plastic materials traditionally used for making trays, such as polystyrene (PS) or polypropylene (PP).

Depending on the type of foodstuffs to be packed and stored in the containers, there are different requirements to be met by the seal. In general, the seal must be able to withstand cooling, storage and transportation without the lid or lidding film loosening from the tray. For some kinds of foodstuff, such as fresh meat, the seal must also be gas-proof in order to keep a modified atmosphere inside the container for a specified number of days, in which the foodstuff must be able to be stored before use.

If the sealing media in the tray as well as in the lid or lidding film is APET, such a seal can be obtained by heating the lid or lidding film and the sealing rim of the tray, to which the lid or lidding film is to be sealed, to a temperature of around 180 °C and pressing the two parts tightly together for a short period of time. This heat sealing procedure does not involve actual melting of the APET, but the material becomes soft and secondary chemical bonds occur between the sealing media of the tray and the sealing media of the lid or lidding film.

In the APET industry, it is common to employ some kind of surface modification due to the inherent adhesion between two APET surfaces. The surface modification reduces the coefficient of friction (CoF) on the outer layers of an APET tray in order to obtain proper de-nesting. Surface modification for de-nesting is done either by adding internal or external slip agents, which in both cases act on the surfaces.

External slip agents are typically polydimethylsiloxane (PDMS) or other functionalised siloxanes. These are commonly referred to as "silicones". As a result of their physico-chemical nature, further to reducing CoF, these will also lower the surface energy of the APET surface.

Internal slip agents for APET are typically fatty amides, e.g. erucamide (cis-13-docosenoamide), behenamide (docosanamide), oleamide (9-octadecenoamide) or other compounds which, like the fatty amides, tend to migrate to the surface, resulting in a reduction of CoF. The driving force for these compounds to migrate towards the surface is their higher hydrophobicity compared to APET. Thus, the migration of these compounds to the surface, in addition to lowering the CoF, will also result in a lowering of the surface energy.

To summarize, all slip agents, internal as well as external, intended for APET not only lower the CoF, but also lower the surface energy of the APET surface. Hence, these compounds will hereinafter be collectively referred to as "surface energy changing agents".

It is known in the food packaging industry that it is beneficial for the sealing performance to use highly modified PET as sealing top layer. PET modification is done by modifying the backbone of the polyethylene terephthalate polymer through the incorporation of a comonomer, such as isophthalic acid (IPA), cyclohexanedimethanol (CHDM) or diethyleneglycol (DEG). These modifications make the materials softer at relevant sealing temperatures, which facilitates the bonding between the lid or lidding film and the sealing surface of the tray.

By "highly modified PET" is meant a PET, in which the degree of modification is substantially higher than in standard PET grades intended for bottles and trays, e.g. in the case of IPA modification, substantially higher than 1.6-1.8 mole %, which is considered an industry standard.

A well-known problem connected to heat sealing involving APET sealing media is that if the sealing rim of the tray is contaminated with even rather small amounts of food substances, for instance meat juice when packing fresh meat, the seal will not be gas-proof. This means that the seal cannot keep the modified atmosphere inside the container for the specified amount of time, which results in accelerated decay of the foodstuff stored in the container.

The most used solutions to these problems involve the use of multi-layer plastic sheets or film for producing the tray and the lid or lidding film. Besides APET, these multi-layer sheets or film comprise a sealing layer of another type of plastic material, which is more meltable than APET, such as PP or (most typical) PE, which is laminated, extrusion coated or co-extruded onto the APET layer. If the other material is PE, the trays are known as APET-PE trays.

The use of such multi-layer materials with a sealing layer of another plastic material solves the above-specified problems because, unlike APET, these materials do actually melt during the heat sealing process at a temperature, which is lower than the one needed for heat sealing APET. This means that heat sealing of these other plastic materials results in stronger and tighter seals than heat sealing of APET. In fact, if they are made properly, these seals will be made gas-proof even if the sealing rim should be contaminated as described above.

From a sealing point of view, the above-described kind of solutions is ideal. However, it has some production-related drawbacks. When the trays are thermoformed, 30-50 % of the plastic sheet, from which they are formed, do not become a part of a tray but end up as so-called skeletal waste. In order to reduce the waste from the production, this skeletal waste is traditionally reused in extrusion of new sheets. This is no problem, if the sheet is made from pure or highly modified APET. In the case of multi-layer sheets, however, the APET will be contaminated with the material from the sealing layer, typically PE.

This contamination of the reused APET material causes serious production problems in the extrusion and thermoforming processes relating to opacity, sagging and brittleness of the resulting trays and lids or lidding film. Thus, the use of PE or another material as a sealing layer along with the APET layer in a multi-layer sheet either results in a decreased quality of the produced containers or in an increased amount of waste, which add costs to the production. These drawbacks also inhibit post-consumer recycling of multi-material (APET-PE) trays, the PE material contaminating the recycling material stream.

A highly modified PET may also be used as sealing layer. However, this material is rather expensive and requires, when used in applications sensitive to contamination, higher pressure and temperature during the sealing process than the other mentioned materials. Thus, the use of a highly modified PET as sealing layer reduces the production rate and increases the costs of the sealing equipment. Furthermore, even with the required process parameters, highly modified PET is still sensitive to contamination and sealing rim warpage.

Having clean surfaces is advantageous for obtaining good heat sealing between APET surfaces because contaminants, like meat juice, reduce the sealing performance.

In fact, even the use of slip agents (internal or external) reduces the sealing performance. Consequently, silicones are not used in applications with high heat sealing requirements.

With internal (migrating) slip agents, however, it is possible to precisely add a quantity, which is evenly distributed and at the same time sufficiently high to give the desired slip performance and not unnecessarily high anywhere on the surface, which would have a detrimental effect on the sealing performance.

Document EP2643238B1 discloses a container according to the preamble of claim 1.

### Brief description of the invention

It is an object of the present invention to provide containers that overcome the above-mentioned problems without sacrificing the advantages related to the use of APET as the basis material of trays as well as lidding films.

The object of the invention is achieved by a container according to claim 1 and a method of producing a container according to claim 9.

The combination of a relatively high level of backbone modification of the top layer material and a reduction of the surface energy of the top layer makes it possible to obtain gas-proof seals with trays made of an APET without any sealing layers of PE or the like, even if the sealing rim is contaminated with meat juice or the like as described above.

This is counter-intuitive and surprising, because the use of externally applied surface energy changing agents, such as for instance silicones, or abnormally high contents of internal slip agents, which results in a reduction of the surface energy, is well-known to have a detrimental influence on the sealing properties if the polyester material within the top layer is not or only slightly modified, which is usually the case for PET intended for bottle or tray production. In addition, even with a highly modified PET as the top layer material but without a reduction of the surface energy, the sealing properties are not sufficient to satisfy the high demands of the fresh meat market. Only when the highly modified PET and the reduction of surface energy are combined, a solution is obtained, which can comply with the high demands of this market when it comes to performance and economic considerations.

It should be noticed that by the expression "amorphous polyethylene terephthalate" is meant polyethylene terephthalate, which is essentially amorphous in the sense that proper steps have been taken in order to minimise the rate of the crystallisation that, to some degree, will always take place in the material. Such steps include the selection of a proper type of PET (in relation to the contents of comonomers in the material) and minimising of the period of time, in which the material has a temperature, at which there is a significant rate of crystallisation.

According to the invention, the modification of the material of at least the top layer is obtained by modifying the backbone of the polyethylene terephthalate polymer therein through the incorporation of a comonomer, such as isophthalic acid (IPA), cyclohexanedimethanol (CHDM) or diethyleneglycol (DEG).

According to the invention, the modified APET material, at least in the top layer, comprises more than 4 mole %, preferably more than 6 mole %, most preferably more than 8 mole %, of monomers other than ethylene glycol or terephthalic acid residues.

The modification of the APET material may be obtained by using individual PET polymers, each with a mix of different backbone modifications, by blending a number of different PET polymers, each being modified with a given backbone modification, or by any combination thereof.

The application of such modifications of the APET material to the specified levels has proved to be optimal for obtaining the desired positive effect on the sealing properties when combined with the reduction of the surface energy of the top layer. These levels of modification are significantly higher than the modification levels typically used for meeting other objectives, such as keeping the crystallisation rate low for facilitating the production of transparent trays.

In an embodiment of the invention, a surface energy changing agent is applied at least onto the sealing surface along the full circumference of the tray.

In an embodiment of the invention, the externally applied surface energy changing agent is a siloxane type of polymer, such as a silicone in the form of polydimethylsiloxane (PDMS) or a functionalised siloxane.

The application of an external surface energy changing agent, such as a silicone, has proven to result in significantly improved sealing properties when combined with the above-described modification of the material of the top layer, which is surprising because application of silicones and the like is known to normally be detrimental to the heat sealing properties.

In an embodiment of the invention, a surface energy changing agent, for instance in the form of a fatty amide slip masterbatch, is incorporated in the formulation during extrusion of the sheet.

Similar effects as with externally applied surface energy changing agents can be obtained by reducing the surface energy through the incorporation of a surface energy changing agent within the material.

Accordding to the invention, the external and/or internal application of surface energy changing agent(s) cause(s) the surface energy of the top layer to be reduced by at least 20 %, preferably by at least 30 %, most preferably by at least 40 %. The above-described levels of reduction of the surface energy have proved to be sufficient for obtaining the desired positive effect on the heat sealing properties.

According to the invention, the material of each of the layers of the formed tray has an intrinsic viscosity between 0.6 dl/g and 1.1 dl/g, preferably between 0.7 dl/g and 0.9 dl/g, most preferably between 0.7 dl/g and 0.8 dl/g.

The unit "dl/g" uses for quantifying the intrinsic viscosity is an abbreviation of the expression "decilitres per gram", otherwise known as inverse concentration.

The use of PET with intrinsic viscosities within these ranges has proved to be advantageous in that it gives a good balance between processability and product properties, such as transparency and impact properties.

In an embodiment of the invention, the thickness of material of the tray is between 200 µm and 1200 µm.

If the thickness of material of the tray is chosen within this range, the requirements regarding stiffness, barrier properties and impact resistance are all fulfilled.

In an embodiment of the invention, the container further comprises a lidding film, which is bonded to the tray by a gas-proof seal formed along the sealing rim.

In an embodiment of the invention, the lidding film is soft and flexible, having a thickness of material between 10 µm and 200 µm, preferably between 15 µm and 150 µm.

For economic and manufacturing reasons, it can be advantageous to use lidding films which are soft and flexible.

If the thickness of material of the soft and flexible lidding film is chosen within this range, the requirements regarding strength and barrier properties are all fulfilled.

In an embodiment of the invention, the lidding film comprises at least one layer of polyethylene terephthalate.

The use of PET in the lidding film is advantageous due to the material characteristics, which make it very suitable for storage of foodstuffs, such as a high transparency and a high impermeability to oxygen as already mentioned above.

The at least one PET layer may, for instance, consist of bi-axially oriented PET (BO-PET), a PET sealing layer and/or other functional layers relating to barrier properties, puncture resistance, etc.

The invention also relates to a method of producing a container according to claim 9.

This method results in a tray with the advantages described above.

Thermoforming is known to be a cost-efficient, fast and reliable way of forming different kinds of parts from plastic materials as the ones used for the present invention.

According to the invention, the modification of the material of at least the top layer is obtained by modifying the backbone of the polyethylene terephthalate polymer therein through the incorporation of a comonomer, such as isophthalic acid (IPA), cyclohexanedimethanol (CHDM) or diethyleneglycol (DEG).

In an embodiment of the invention, the reduction of the surface energy is obtained at least partly by applying a surface energy changing agent, for instance in the form of a siloxane type of polymer, such as a silicone, at least onto the sealing surface of the formed tray along the full circumference of the tray, for instance by means of roll coating or immersion in a bath containing the surface energy changing agent.

Roll coating and dip coating are well-known and reliable methods for applying materials to a given surface.

In an embodiment of the invention, the reduction of the surface energy is obtained at least partly through the incorporation of a surface energy changing agent, for instance in the form of a fatty amide slip masterbatch, in the formulation during the extrusion of the sheet.

In an embodiment of the invention, the method further comprises a step of bonding a lidding film to the sealing surface of the tray by means of a process that involves the use of heat and pressure.

Bonding a lidding film to the sealing surface by means of a process using heat and pressure enables for obtaining a gas-proof seal between the tray and the lidding film, even if the sealing rim is contaminated with meat juice or the like.

### Figures

A few exemplary embodiments of the invention are described more in detail in the following with reference to the figures of which
- Fig. 1: shows an exploded view of a container according to an embodiment of the invention,
- Fig.2a: shows a cross-sectional view of a container according to an embodiment of the invention,
- Fig. 2b: shows an enlarged detail of Fig. 2a,
- Fig. 3a: shows a top view of a container according to an embodiment of the invention,
- Fig. 3b: shows a side view of the same container as shown in Fig. 3a, and
- Fig. 4: illustrates schematically an apparatus for making trays of containers according to an embodiment of the invention.

### Detailed description of the invention

The present invention relates to a container 1 for foodstuffs comprising a tray 2 and potentially also a lidding film 3 and to a method for producing such a container 1.

The tray 2 is made of APET, which can be transparent (natural) or coloured (either opaque or transparent). Thus, it is a full polyester tray 2 with sealing properties matching the ones of the APET-PE solutions currently dominating the market.

Typically, the tray 2 is thermoformed from a sheet of material. This sheet may comprise one or more layers, typically three layers, wherein the backbone of the APET within the material of at least the top layer is highly modified through the incorporation of a comonomer, such as isophthalic acid (IPA), cyclohexanedimethanol (CHDM) or diethyleneglycol (DEG).

The resulting modification of the APET material may be obtained by using individual PET polymers, each with a mix of different backbone modifications, by blending a number of different PET polymers, each being modified with a given backbone modification, or by any combination thereof.

This modification of the top layer material results in an increase of the softness of the APET at relevant sealing temperatures. In typical embodiments of the invention, the carboxylic acid component of the APET is modified to comprise a certain amount of isophthalic acid residues and/or the hydroxyl component of the APET is modified to comprise a certain amount of cyclohexanedimethanol and/or diethyleneglycol residues.

In order to obtain the desired sealing properties, the above-described modification of the top layer material must be combined with a reduction of the surface energy on the surface of the highly modified APET top layer of the tray 2. The reduction of the surface energy has proved to increase the sealing performance significantly when combined with highly modified APET. Two fundamentally different ways of changing the surface energy are by applying an external surface energy changing agent on top of the top layer and/or by adding a surface energy changing agent internally in the formulation during extrusion of the sheet.

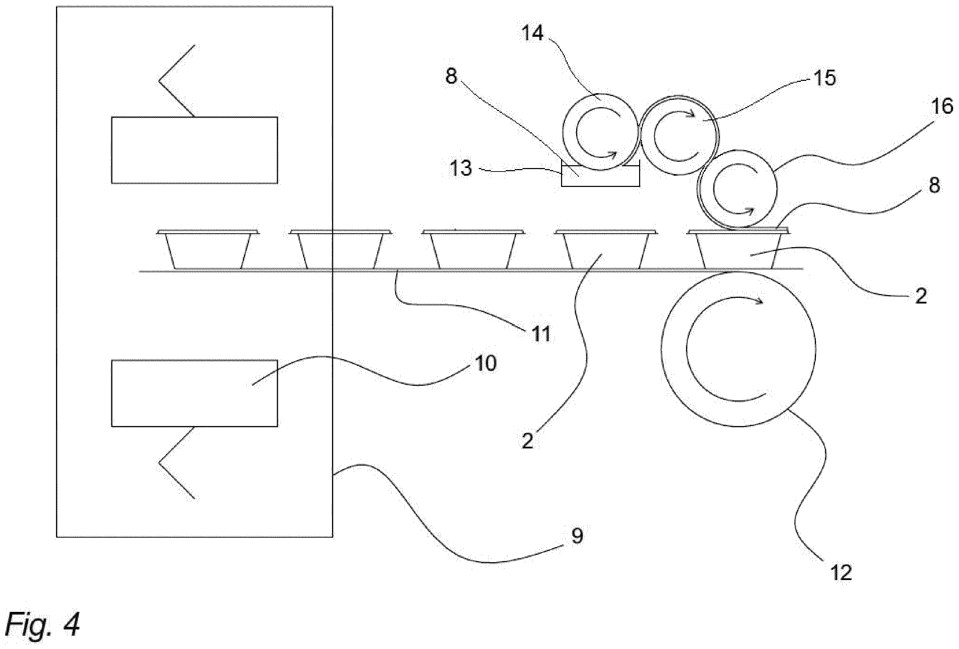

Especially, this reduction of the surface energy is crucial on the sealing rim 6 of the tray 2, but it is not necessarily limited to this area. This can be accomplished by either externally applying a silicone (or more correctly a siloxane type of polymer) on the top layer of the sheet or the tray 2, for instance using a roll as illustrated in Fig. 4 and described below, or by adding abnormally high amounts of internal slip agents through a masterbatch in the formulation for the extruded sheet as compared to the amounts necessary for obtaining the desired slip property.

A well-known method to change the surface energy is to apply a silicone onto the surface of the top layer material. Within the packaging industry, this is normally done in order to reduce the coefficient of friction of the surface for de-nesting purposes. Typically, the externally applied silicone would be polydimethylsiloxane (PDMS) or a functionalized siloxane.

External application of a silicone via for instance a silicone bath is generally avoided on APET trays used for heat seal purposes due to the reduction of the sealing performance of the APET related thereto. It is a well-known and general knowledge that external employment of a silicone on APET trays results in reduced sealing properties thereof.

A lowering of the surface energy on the surface of a polyester can also be achieved internally by incorporating an internal slip masterbatch in the formulation during the extrusion of the sheet. This method is commonly used to reduce the coefficient of friction of the surface for de-nesting purposes. However, just like external application of a silicone, the incorporation of a slip masterbatch changes the surface energy of the polyester by introducing molecules of lower polarity than PET at the interface with the air.

It is believed that the reduced surface energy of the polyester top layer is beneficial by rendering the surface more hydrophobic and, thus, increasing the contact angle of water-like droplets including fresh meat juice. As a derived effect of this, it may also reduce the amount of meat juice contaminant deposited on the sealing surface due to the more hydrophobic nature of the surface.

The top layer may also comprise some additional material(s) making the sheet easier to unwind and the stacked trays easier to separate from each other.

For manufacturing purposes, the molecular length of the PET defined by the so-called intrinsic viscosity is ideally between 0.7 dl/g and 0.8 dl/g. An intrinsic viscosity between 0.7 dl/g and 0.9 dl/g is acceptable, whereas PET materials having intrinsic viscosities below 0.6 dl/g or above 1.1 dl/g are not relevant for this purpose.

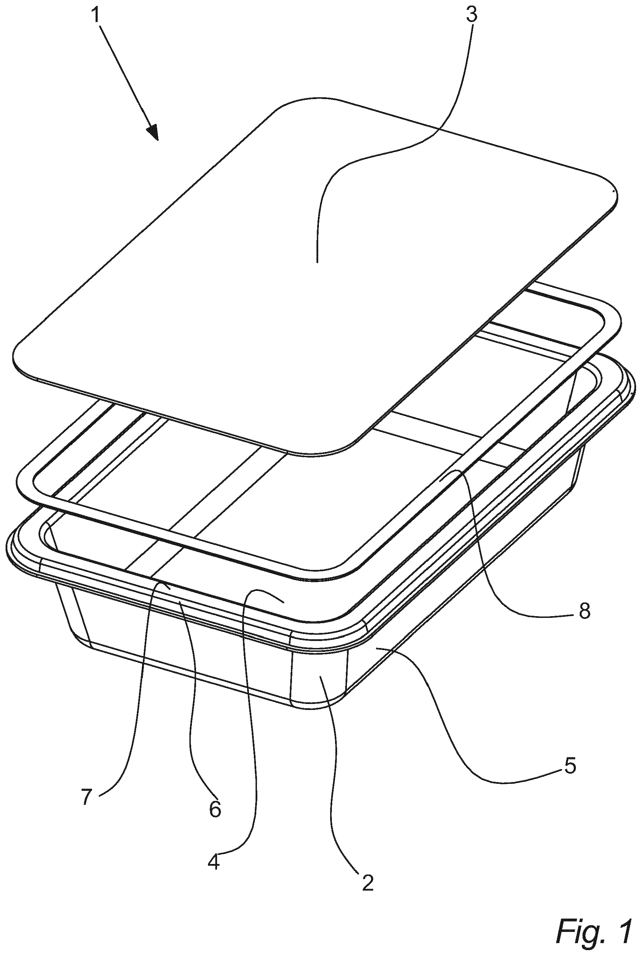

Fig. 1 illustrates an exploded view of a container 1 according to an embodiment of the invention, in which an externally applied surface energy changing agent 8 is used. The illustrated container 1 consists of two main parts, namely a tray 2 and a lidding film 3.

The tray 2 comprises a bottom part 4, a number of side walls 5 and a peripheral sealing rim 6 at its top. The sealing rim 6 has an upward facing and flat sealing surface 7, onto which is applied a surface energy changing agent 8 extending along the full circumference of the tray 2.

In the shown embodiment, the tray 2 has four straight side walls 5 connected to each other by rounded corners. However, the tray 2 may be of any shape, such as for instance circular (with one single, curved side wall) or triangular (with three straight side walls).

In the illustrated embodiment, the surface energy changing agent 8 is placed at least on the sealing surface 7 of the sealing rim 6, typically by roll coating, so that none of the surface energy changing agent 8 will end up on the skeletal waste from the thermoforming or inside the tray 2 after sealing of the container 1.

As mentioned above, other embodiments of the invention may include external application of a surface energy changing agent 8 by other means onto the sheet of material, from which the container 1 is formed, such as for instance a silicone bath prior to the thermo forming of the container 1, as well as internal application of a surface energy changing agent, for instance through the incorporation of a suitable masterbatch in the formulation during extrusion of the sheet.

The shelf life of foodstuff packed in a container 1 according to the invention is similar to the shelf life obtained when using APET-PE trays. Due to the sealing properties achieved by the combination of highly modified top layer material and reduced surface energy as defined by the present invention, the seal of the container 1 is as secure as the ones of APET-PE trays. Furthermore, the sealing can be made at temperatures, which cause no warping of the APET material of the tray 2. Thus, the bonded area is as gas-proof for the modified atmosphere, e.g. nitrogen, oxygen and/or carbon dioxide, surrounding the foodstuff as in any APET-PE seal.

Test have shown, that containers 1 according to the invention have a weld strength less than 0.6 bar (absolute pressure) measured in a vacuum tank, which is a common way of testing the seal strength of containers used in the food packaging industry. This means that the seal can withstand an internal overpressure of at least 0.4 bar and normally 0.5-0.7 bar (overpressure) in the sealed tray 2.

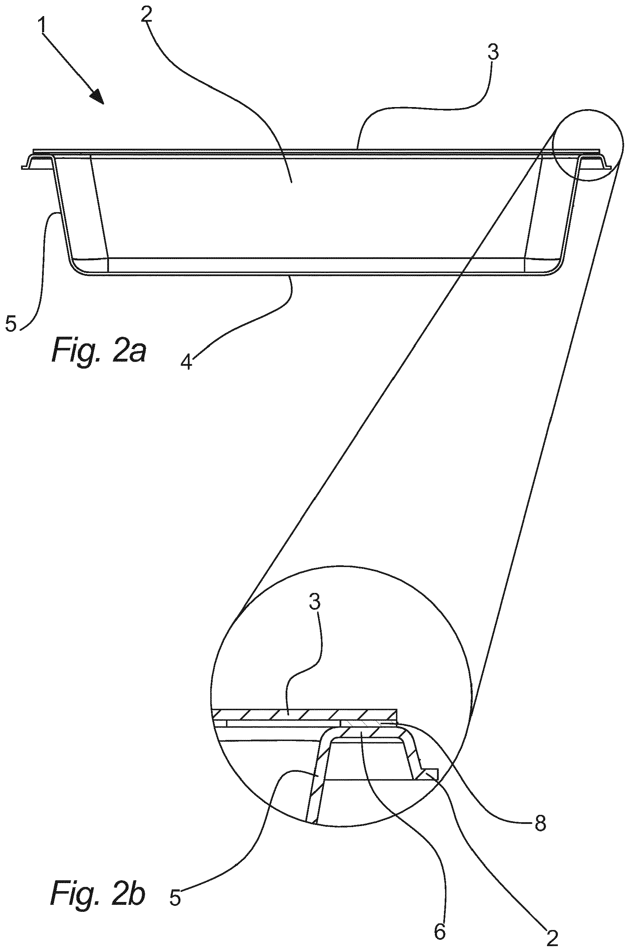

Fig. 2a shows a cross-sectional view of the same container 1 as shown in Fig. 1, and Fig. 2b shows an enlarged detail thereof, illustrating the position of the externally applied surface energy changing agent 8 between the lidding film 3 and the sealing rim 6 of the tray 2, when the container 1 is sealed.

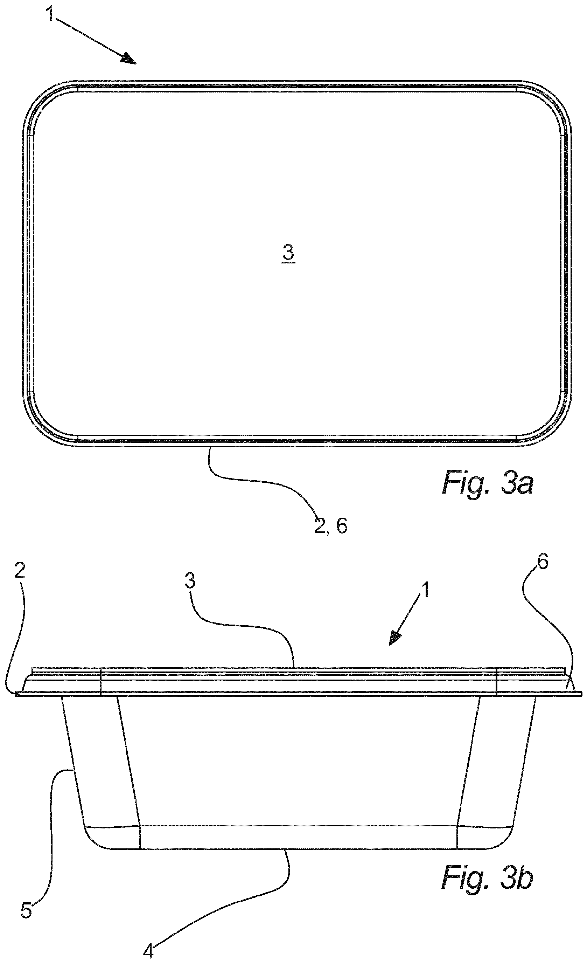

Figs. 3a and 3b show a top view and a side view, respectively, of the container 1 with the lidding film 3 heat sealed to the sealing rim 6 of the tray 2.

Fig. 4 illustrates schematically an apparatus for making trays 2 of containers 1 according to an embodiment of the invention.

In general, a roll coating machine works by transferring a layer of coating from the surface of a roll to the surface of a part. The transfer roll system illustrated schematically in Fig. 4 utilizes three rolls, namely a pickup roll 14, a transfer roll 15 and a coating roll 16, to transfer the surface energy changing agent 8 from a tank 13 or reservoir containing the surface energy changing agent in a liquid form to the sealing surface of the tray 2.

The pickup roll 14 picks up the surface energy changing agent 8 from the tank 13 and transfers it to the transfer roll 15, from which it is passed on to the coating roll 16 and, finally, to the sealing surface of the tray 2.

Transfer roll systems are capable of depositing a thinner layer of coating than two roll systems (without the transfer roll 15). This is due to the fact that a film split occurs at every roll interface, i.e. at the interface between two rolls 14-16 and between the coating roll 16 and the tray 2, so that on each surface, onto which the surface energy changing agent 8 is deposited, the thickness of the layer will be thinner than on the surface of the preceding roll in the roll train.

It should be noted that the figures show the layer of the surface energy changing agent 8 much thicker than is the reality in practice. In fact, this layer is very thin in practice.

### List of reference numbers

- 1.: Container
- 2.: Tray
- 3.: Lidding film
- 4.: Bottom part
- 5.: Side wall
- 6.: Sealing rim
- 7.: Sealing surface
- 8.: Externally applied surface energy changing agent
- 9.: Thermoforming apparatus
- 10.: Thermoforming tool
- 11.: Conveyor
- 12.: Conveyor roll
- 13.: Tank
- 14.: Pickup roll
- 15.: Transfer roll
- 16.: Coating roll

## Claims

1. A container (1) for foodstuff, said container comprising
a tray (2) formed from a sheet of material comprising one or more layers, wherein the material of each of the layers of the formed tray comprises at least 85 % of amorphous polyethylene terephthalate (APET), said tray comprising
a bottom part (4),
one or more side walls (5) and
a peripheral sealing rim (6) at its top, said sealing rim having a substantially flat upward facing sealing surface (7),
wherein, at least in the top layer of the formed tray, i.e. the layer forming the sealing surface, the material is modified in such a way that the APET therein has an increased softness,
said container (1) being **characterized in that** the surface is modified by means of one or more surface energy changing agents, for instance in the form of internal and/or external slip agents, so that the surface energy of the top layer is reduced,
**in that** the modification of the material of at least the top layer is obtained by modifying the backbone of the polyethylene terephthalate polymer therein through the incorporation of a comonomer, such as isophthalic acid (IPA), cyclohexanedimethanol (CHDM) or diethyleneglycol (DEG),
**in that** the modified APET material, at least in the top layer, comprises more than 4 mole %, preferably more than 6 mole %, most preferably more than 8 mole %, of monomers other than ethylene glycol or terephthalic acid residues,
**in that** the external and/or internal application of surface energy changing agent(s) cause(s) the surface energy of the top layer to be reduced by at least 20 %, preferably by at least 30 %, most preferably by at least 40 %, and
**in that** the material of each of the layers of the formed tray has an intrinsic viscosity between 0.6 dl/g and 1.1 dl/g, preferably between 0.7 dl/g and 0.9 dl/g, most preferably between 0.7 dl/g and 0.8 dl/g.

2. The container according to claim 1, wherein a surface energy changing agent (8) is applied at least onto the sealing surface along the full circumference of the tray.

3. The container according to claim 2, wherein the externally applied surface energy changing agent is a siloxane type of polymer, such as a silicone in the form of polydimethylsiloxane (PDMS) or a functionalised siloxane.

4. The container according to any of the preceding claims, wherein a surface energy changing agent, for instance in the form of a fatty amide slip masterbatch, is incorporated in the formulation during extrusion of the sheet.

5. The container according to any of the preceding claims, wherein the thickness of material of the tray is between 200 µm and 1200 µm.

6. The container according to any of the preceding claims further comprising a lidding film (3), which is bonded to the tray by a gas-proof seal formed along the sealing rim.

7. The container according to claim 6, wherein the lidding film is soft and flexible, having a thickness of material between 10 µm and 200 µm, preferably between 15 µm and 150 µm.

8. The container according to claim 6 or 7, wherein the lidding film comprises at least one layer of polyethylene terephthalate.

9. A method of producing a container (1) for foodstuff, said method comprising the steps of:
extruding a sheet of material comprising one or more layers, wherein the material of each of the layers comprises at least 85 % of amorphous polyethylene terephthalate (APET) and, at least the material of a top layer of the sheet is modified in such a way that the APET therein has an increased softness, and wherein the surface is modified by means of one or more surface energy changing agents, for instance in the form of internal and/or external slip agents, so that the surface energy of the top layer is reduced; and
forming, for instance by thermoforming, a tray (2) made from the extruded sheet of material, said tray comprising a bottom part (4), one or more side walls (5) and a peripheral sealing rim (6) at its top, said sealing rim having a substantially flat upward facing sealing surface (7) formed by the top layer of the sheet of material,
wherein the modification of the material of at least the top layer is obtained by modifying the backbone of the polyethylene terephthalate polymer therein through the incorporation of a comonomer, such as isophthalic acid (IPA), cyclohexanedimethanol (CHDM) or diethyleneglycol (DEG),
wherein the modified APET material, at least in the top layer, comprises more than 4 mole %, preferably more than 6 mole %, most preferably more than 8 mole %, of monomers other than ethylene glycol or terephthalic acid residues,
wherein the external and/or internal application of surface energy changing agent(s) cause(s) the surface energy of the top layer to be reduced by at least 20 %, preferably by at least 30 %, most preferably by at least 40 %, and
wherein the material of each of the layers of the formed tray has an intrinsic viscosity between 0.6 dl/g and 1.1 dl/g, preferably between 0.7 dl/g and 0.9 dl/g, most preferably between 0.7 dl/g and 0.8 dl/g.

10. The method according to claim 9, wherein the reduction of the surface energy is obtained at least partly by applying a surface energy changing agent (8), for instance in the form of a siloxane type of polymer, such as a silicone, at least onto the sealing surface of the formed tray along the full circumference of the tray, for instance by means of roll coating or immersion in a bath containing the surface energy changing agent.

11. The method according to claim 9 or 10, wherein the reduction of the surface energy is obtained at least partly by incorporating a surface energy changing agent, for instance in the form of a fatty amide slip masterbatch, in the formulation during the extrusion of the sheet.

12. The method according to any of claims 9-11, further comprising a step of bonding a lidding film (3) to the sealing surface of the tray by means of a process that involves the use of heat and pressure.

## Patentansprüche

1. Behälter (1) für Lebensmittel, wobei der Behälter umfasst
eine Schale (2), die aus einer Platte von Material umfassend eine oder mehrere Schichten geformt ist, wobei das Material jeder der Schichten der geformten Schale mindestens 85 % von amorphem Polyethylenterephthalat (APET) umfasst, wobei die Schale umfasst
ein Unterteil (4),
eine oder mehrere Seitenwände (5) und
einen umfangsseitigen Dichtrand (6) an ihrem oberen Teil, wobei der Dichtrand eine im Wesentlichen flache, nach oben gewandte Dichtungsfläche (7) aufweist,
wobei, mindestens in der oberen Schicht der geformten Schale, d.h. in der die Dichtungsfläche bildenden Schicht, das Material derart modifiziert worden ist, dass das darin befindliche APET eine erhöhte Weichheit aufweist,
wobei der Behälter (1) **dadurch gekennzeichnet ist, dass** die Oberfläche mittels eines oder mehrerer die Oberflächenenergie verändernden Mittel(s) modifiziert ist, beispielsweise in Form von internen und/oder externen Gleitmitteln, so dass die Oberflächenenergie der oberen Schicht reduziert ist,
dass die Modifizierung des Materials zumindest der oberen Schicht durch Modifizieren des Rückgrats des darin befindlichen Polyethylenterephthalatpolymers durch das Einbetten eines Comonomers, wie beispielsweise Isophthalsäure (IPA), Cyclohexandimethanol (CHDM) oder Diethylenglycol (DEG), erhalten wird,
dass das modifizierte APET-Material, zumindest in der oberen Schicht, mehr als 4 Molprozent, bevorzugt mehr als 6 Molprozent, eher bevorzugt mehr als 8 Molprozent, von Monomeren, die nicht Ethylenglycol- oder Terephthalsäurereste sind, umfasst,
dass das externe und/oder interne Auftragen von die Oberflächenenergie veränderndem bzw. verändernden Mittel(n) bewirkt bzw. bewirken, dass die Oberflächenenergie der oberen Schicht um mindestens 20 %, bevorzugt um mindestens 30 %, eher bevorzugt um mindestens 40 %, reduziert wird, und
dass das Material jeder der Schichten der geformten Schale eine intrinsische Viskosität von zwischen 0,6 dl/g und 1,1 dl/g, bevorzugt zwischen 0,7 dl/g und 0,9 dl/g, eher bevorzugt zwischen 0,7 dl/g und 0,8 dl/g, aufweist.

2. Behälter nach Anspruch 1, wobei ein die Oberflächenenergie veränderndes Mittel (8) zumindest auf die Dichtungsfläche am gesamten Umfang entlang aufgetragen ist.

3. Behälter nach Anspruch 2, wobei das extern aufgetragene die Oberflächenenergie verändernde Mittel ein Polymer von einem Siloxantyp ist, wie beispielsweise ein Silikon in Form von Polydimethylsiloxan (PDMS) oder ein funktionalisiertes Siloxan.

4. Behälter nach einem der vorgehenden Ansprüche, wobei ein die Oberflächenenergie veränderndes Mittel, beispielsweise in Form eines Fettamiden-Gleit-Masterbatches, in der Formulierung während der Extrusion der Platte eingebettet ist.

5. Behälter nach einem der vorgehenden Ansprüche, wobei die Materialstärke der Schale zwischen 200 µm und 1200 µm beträgt.

6. Behälter nach einem der vorgehenden Ansprüche, ferner umfassend eine Deckelfolie (3), die durch eine am Dichtrand entlang gebildete gasdichte Abdichtung mit der Schale verbunden ist.

7. Behälter nach Anspruch 6, wobei die Deckelfolie weich und flexibel ist und eine Materialstärke von zwischen 10 µm und 200 µm, bevorzugt zwischen 15 µm und 150 µm aufweist.

8. Behälter nach Anspruch 6 oder 7, wobei die Deckelfolie mindestens eine Schicht aus Polyethylenterephthalat umfasst.

9. Verfahren zur Herstellung eines Behälters (1) für Lebensmittel, wobei das Verfahren die Schritte umfasst:
Extrudieren einer Platte von Material umfassend eine oder mehrere Schichten, wobei das Material jeder der Schichten mindestens 85 % von amorphem Polyethylenterephthalat (APET) umfasst, und zumindest das Material einer oberen Schicht der Platte derart modifiziert wird, dass das darin befindliche APET eine erhöhte Weichheit aufweist, und wobei die Oberfläche mittels eines oder mehrerer die Oberflächenenergie verändernden Mittel(s) modifiziert wird, beispielsweise in Form von internen und/oder externen Gleitmitteln, so dass die Oberflächenenergie der oberen Schicht reduziert wird; und
Formen, beispielsweise durch Thermoformen, einer Schale (2), die aus der extrudierten Materialplatte gefertigt ist, wobei die Schale ein Unterteil (4), eine oder mehrere Seitenwände (5) und einen umfangsseitigen Dichtrand (6) an ihrem oberen Teil aufweist, wobei der Dichtrand eine im Wesentlichen flache, nach oben weisende Dichtungsfläche (7) aufweist, die durch die obere Schicht der Materialplatte gebildet ist,
wobei die Modifizierung des Materials zumindest der oberen Schicht durch Modifizieren des Rückgrats des darin befindlichen Polyethylenterephthalatpolymers durch das Einbetten eines Comonomers, wie beispielsweise Isophthalsäure (IPA), Cyclohexandimethanol (CHDM) oder Diethylenglycol (DEG), erhalten wird,
wobei das modifizierte APET-Material, zumindest in der oberen Schicht, mehr als 4 Molprozent, bevorzugt mehr als 6 Molprozent, eher bevorzugt mehr als 8 Molprozent, von Monomeren, die nicht Ethylenglycol- oder Terephthalsäurereste sind, umfasst,
wobei das externe und/oder interne Auftragen von die Oberflächenenergie veränderndem bzw. verändernden Mittel(n) bewirkt bzw. bewirken, dass die Oberflächenenergie der oberen Schicht um mindestens 20 %, bevorzugt um mindestens 30 %, eher bevorzugt um mindestens 40 %, reduziert wird, und
wobei das Material jeder der Schichten der geformten Schale eine intrinsische Viskosität von zwischen 0,6 dl/g und 1,1 dl/g, bevorzugt zwischen 0,7 dl/g und 0,9 dl/g, eher bevorzugt zwischen 0,7 dl/g und 0,8 dl/g aufweist.

10. Verfahren nach Anspruch 9, wobei die Reduktion der Oberflächenenergie durch Auftragen eines die Oberflächenenergie verändernden Mittels (8), beispielsweise in Form eines Polymers vom Siloxantyp, wie beispielsweise Silikon, auf die Dichtungsfläche der geformten Schale am gesamten Umfang der Schale entlang zumindest teilweise erhalten wird, beispielsweise durch Walzenbeschichten oder Immersion in einem Tauchbad, das das die Oberflächenenergie verändernde Mittel enthält.

11. Verfahren nach Anspruch 9 oder 10, wobei die Reduktion der Oberflächenenergie durch Einbetten eines die Oberflächenenergie verändernden Mittels, beispielsweise in Form eines Fettamiden-Gleit-Masterbatches, in der Formulierung während der Extrusion der Platte zumindest teilweise erhalten wird.

12. Verfahren nach einem der Ansprüche 9-11, ferner umfassend einen Schritt des Verbindens einer Deckelfolie (3) mit der Dichtungsfläche der Schale mittels eines Verfahrens, das die Verwendung von Wärme und Druck beinhaltet.

## Revendications

1. Contenant (1) pour produit alimentaire, ledit contenant comprenant
un plateau (2) formé d'une feuille de matériau, comprenant une ou plusieurs couches, le matériau de chacune des couches du plateau formé comprenant au moins 85% de polyéthylène téréphtalate amorphe (APET), ledit plateau comprenant
une partie inférieure (4),
une ou plusieurs parois latérales (5) et
un rebord d'étanchéité périphérique (6) à son sommet, ledit rebord d'étanchéité ayant une surface d'étanchéité (7) essentiellement plate tournée vers le haut,
dans lequel, au moins dans la couche supérieure du plateau formé, c'est-à-dire la couche formant la surface d'étanchéité, le matériau est modifié de telle sorte que l'APET présente une douceur accrue,
ledit contenant (1) étant **caractérisé en ce que** la surface est modifiée au moyen d'un ou plusieurs agents modifiant l'énergie de surface, par exemple sous la forme d'agents de glissement internes et / ou externes, de sorte que l'énergie de surface de la couche supérieure soit réduite,
**en ce que** la modification du matériau d'au moins la couche supérieure est obtenue en modifiant le squelette du polymère de polyéthylène téréphtalate par l'incorporation d'un comonomère, tel que l'acide isophtalique (IPA), le cyclohexanediméthanol (CHDM) ou le diéthylèneglycol (DEG),
**en ce que** le matériau APET modifié, au moins dans la couche supérieure, comprend plus de 4% en moles, de préférence plus de 6% en moles, le plus préférablement plus de 8% en moles de monomères autres que des résidus d'éthylène glycol ou d'acide téréphtalique,
**en ce que** l'application externe et / ou interne d'agent (s) modifiant l'énergie de surface a pour effet de réduire l'énergie de surface de la couche supérieure d'au moins 20%, de préférence d'au moins 30%, le plus préférablement d'au moins 40%, et
**en ce que** le matériau de chacune des couches du plateau formé présente une viscosité intrinsèque comprise entre 0,6 dl/g et 1,1 dl/g, de préférence entre 0,7 dl/g et 0,9 dl/g, le plus préférablement entre 0,7 dl/g et 0,8 dl/g.

2. Contenant selon la revendication 1, dans lequel un agent modifiant l'énergie de surface (8) est appliqué au moins sur la surface d'étanchéité sur toute la circonférence du plateau.

3. Contenant selon la revendication 2, dans lequel l'agent modifiant l'énergie de surface appliqué extérieurement est un polymère de type siloxane, tel qu'une silicone sous la forme de polydiméthylsiloxane (PDMS) ou un siloxane fonctionnalisé.

4. Contenant selon l'une quelconque des revendications précédentes, dans lequel un agent modifiant l'énergie de surface, par exemple sous la forme d'un mélange maître de glissement d'amide grasse, est incorporé dans la formulation lors de l'extrusion de la feuille.

5. Contenant selon l'une quelconque des revendications précédentes, dans lequel l'épaisseur de matériau du plateau est comprise entre 200 µm et 1200 µm.

6. Contenant selon l'une quelconque des revendications précédentes, comprenant en outre un film de recouvrement (3), qui est lié au plateau par un joint étanche aux gaz formé le long du bord d'étanchéité.

7. Contenant selon la revendication 6, dans lequel le film de recouvrement est doux et flexible, ayant une épaisseur de matériau comprise entre 10 µm et 200 µm, de préférence entre 15 µm et 150 µm.

8. Contenant selon la revendication 6 ou 7, dans lequel le film de recouvrement comprend au moins une couche de polyéthylène téréphtalate.

9. Procédé de fabrication d'un contenant (1) pour produit alimentaire, ledit procédé comprenant les étapes consistant à :
extruder une feuille de matériau comprenant une ou plusieurs couches, le matériau de chacune des couches comprenant au moins 85% de polyéthylène téréphtalate amorphe (APET), et au moins le matériau d'une couche supérieure de la feuille est modifié de manière à ce que l'APET y présente une douceur accrue, et dans lequel la surface est modifiée au moyen d'un ou plusieurs agents modifiant l'énergie de surface, par exemple sous la forme d'agents glissants internes et / ou externes, de sorte que l'énergie de surface de la couche supérieure soit réduite ; et
former, par exemple par thermoformage, un plateau (2) fabriqué à partir de la feuille de matériau extrudée, ledit plateau comprenant une partie inférieure (4), une ou plusieurs parois latérales (5) et un bord d'étanchéité périphérique (6) à son sommet, ledit rebord d'étanchéité ayant une surface d'étanchéité (7) essentiellement plate tournée vers le haut, formée par la couche supérieure de la feuille de matériau,
dans lequel la modification du matériau d'au moins la couche supérieure est obtenue en modifiant le squelette du polymère de polyéthylène téréphtalate dans celui-ci par l'incorporation d'un comonomère, tel que l'acide isophtalique (IPA), le cyclohexanediméthanol (CHDM) ou le diéthylèneglycol (DEG),
dans lequel le matériau APET modifié, au moins dans la couche supérieure, comprend plus de 4% en moles, de préférence plus de 6% en moles, le plus préférablement plus de 8% en moles de monomères autres que des résidus d'éthylène glycol ou d'acide téréphtalique,
dans lequel l'application externe et / ou interne d'agent (s) modifiant l'énergie de surface a pour effet de réduire l'énergie de surface de la couche supérieure d'au moins 20%, de préférence d'au moins 30%, le plus préférablement d'au moins 40%, et
dans lequel le matériau de chacune des couches du plateau formé présente une viscosité intrinsèque comprise entre 0,6 dl/g et 1,1 dl/g, de préférence entre 0,7 dl/g et 0,9 dl/g, le plus préférablement entre 0,7 dl/g et 0,8 dl/g.

10. Procédé selon la revendication 9, dans lequel la réduction de l'énergie de surface est obtenue au moins en partie en appliquant un agent modifiant l'énergie de surface (8), par exemple sous la forme d'un polymère de type siloxane, tel qu'une silicone, au moins sur la surface d'étanchéité du plateau formé sur toute la circonférence du plateau, par exemple au moyen d'un revêtement au rouleau ou par immersion dans un bain contenant l'agent modifiant l'énergie de surface.

11. Procédé selon la revendication 9 ou 10, dans lequel la réduction de l'énergie de surface est obtenue au moins en partie en incorporant un agent modifiant l'énergie de surface, par exemple sous la forme d'un mélange maître de glissement d'amide grasse, dans la formulation lors de l'extrusion de la feuille.

12. Procédé selon l'une quelconque des revendications 9 à 11, comprenant en outre une étape consistant à coller un film de recouvrement (3) sur la surface d'étanchéité du plateau au moyen d'un processus qui implique l'utilisation de chaleur et de pression.
